# FASCICULE DE BREVET EUROPEEN

(11) **EP 2 454 473 B1**
(45) Date de publication et mention de la délivrance du brevet: **14.09.2016**
(21) Numéro de dépôt: 10728260.0
(22) Date de dépôt: 06.07.2010
(51) Int. Cl.: F03D 1/06, F16B 17/00

(54) **DISPOSITIF D'ASSEMBLAGE DE TRONÇONS DE PALES D'EOLIENNES ET PROCEDE DE LIAISON DE TRONÇONS DE PALES D'EOLIENNES**
VORRICHTUNG ZUR MONTAGE DER ABSCHNITTE VON WINDTURBINENSCHAUFELN UND VERFAHREN ZUR VERBINDUNG DER ABSCHNITTE VON WINDTURBINENSCHAUFELN
DEVICE FOR ASSEMBLING SECTIONS OF WIND-TURBINE BLADES AND METHOD FOR LINKING SECTIONS OF WIND-TURBINE BLADES

(30) Priorité: 16.07.2009 FR 0954935
(43) Date de publication de la demande: 23.05.2012
(73) Titulaire: Airbus Defence and Space SAS, 78130 Les Mureaux (FR)
(72) Inventeur: AUBERON, Marcel, F-33160 St Medard En Jalles (FR); PETERMANN, Nicolas, F-33200 Bordeaux (FR)
(74) Mandataire: Ipside
(86) Numéro de dépôt international: PCT/EP2010/059657
(87) Numéro de publication internationale: WO 2011/006800

(56) Documents cités:
- EP-A1- 0 511 138
- EP-A1- 1 184 566
- EP-A1- 1 584 817
- US-A1- 2009 116 962

## Description

La présente invention concerne la technologie des liaisons mécaniques de pièces structurales en matériaux composites et en particulier prévoit un dispositif d'assemblage de tronçons de pales d'éoliennes et le procédé de liaison de tronçons de pales d'éoliennes associé.

Cette invention concerne en particulier le domaine des pales d'éoliennes de grandes dimensions.

Les liaisons mécaniques contrairement par exemple aux liaisons collées ou soudées sont des liaisons pouvant être démontables.

Une méthode généralement utilisée pour réaliser des liaisons mécaniques entre des panneaux ou des structures composite est d'utiliser plusieurs pièces métalliques d'interface, chacune fixée sur le composite de manière discontinue et d'utiliser des moyens de fixation mécanique comme des vis, des pions, des boulons ou autres.

Si ces solutions peuvent sembler optimisées, il n'en est en fait rien, car elles ne permettent pas d'assurer un passage d'effort homogène sur toute la paroi de la structure composite.

Ceci génère des sur-flux locaux entraînant un risque de rupture progressive s'amorçant sur les zones les plus contraintes, phénomène appelé déboutonnage.

De plus, au niveau analyse mécanique, ces sur-flux locaux sont difficiles à quantifier, ce qui pénalise la fiabilité et l'optimisation de la structure, la liaison réalisée étant ainsi difficile à garantir.

On conçoit aujourd'hui des éoliennes dont les pales atteignent plusieurs dizaines de mètres. De telles pales posent évidemment de nombreux problèmes techniques, mais également logistiques. Car il n'est pas évident de transporter de telles structures en particulier sur terre.

Les pales d'éoliennes sont réalisées en matériaux composites qui permettent de conserver à ces pièces en mouvement une masse réduite ce qui diminue les efforts de fixation à reprendre.

Ces pales sont généralement réalisées en plusieurs tronçons de façon à simplifier leur transport et notamment leur transport par camions.

Se pose donc le problème de l'assemblage mécanique de pièces en matériaux composites dans une perspective de solution mécaniquement optimisée en terme de masse, en particulier dans le cas où les efforts à faire passer par la liaison sont très importants et complexes, la liaison devant résister à des efforts mécaniques, de fatigue et d'environnement importants avec une fiabilité très élevée.

Les documents EP 1 584 817, EP 1 878 915 et WO 01/48378 décrivent des liaisons de tronçons de pales d'éoliennes assurées par plusieurs pièces métalliques.

Dans le cas du document EP 1 878 915 la liaison utilise des tiges métalliques insérées dans les parois du caisson central et collées en place.

Dans le document WO 01/48378 les liaisons sont réparties tout au long de la peau de la pale et dans le document EP 1 584 817 des attaches séparées, solidaires de caissons centraux des tronçons sont fixées, ensemble et reprises par des éléments de couverture de l'interstice entre pales.

Ces exemples de réalisation utilisent des moyens de fixation mécanique discontinus.

Par ailleurs, pour le calcul des liaisons piontées métal/composite des méthodes sont connues même si un tel calcul est assez complexe du fait de tous les phénomènes à prendre en compte et notamment: le transfert d'effort entre le composite et les pions, le cisaillement dans les pions, le matage du composite, la tenue en traction du composite et/ou du métal et le trusquinage.

Il est important de noter que les méthodes connues de calcul des transferts d'effort sont très approximées, car elles simplifient la géométrie de l'assemblage en le représentant sous forme d'un simple cisaillement ce qui permet d'utiliser la méthode de calcul des cisaillements connue sous le nom méthode de Huth.

Du fait de cette approximation, les méthodes classique ne permettent pas en fait d'effectuer un paramétrage exhaustif des liaisons.

En particulier, le modèle de Huth ne permet pas d'étudier des liaisons de géométrie non symétrique, ce qui limite son champ d'utilisation.

De plus, les formules de calcul associées à ce modèle, notamment pour le calcul du cisaillement dans les pions, posent des difficultés de généralisation pour le multi-cisaillement, cas dans lequel ce modèle n'est pas du tout adapté.

Le document FR 2 675 563 décrit un procédé de liaison entre un tube en matériau composite et une pièce métallique tubulaire.

Dans ce procédé, la pièce métallique est fixée au composite à la fois par collage et par des fixations mécaniques, ce qui fait que les flux mécaniques que l'on peut passer sont plus élevés. Ce procédé pour lequel l'optimisation de la liaison piontée dépend de l'orientation des fils de bobinage est toutefois spécifique aux tubes bobinés et donc à un procédé particulier de fabrication du matériau composite.

Ce concept ne s'applique pas directement à des pièces composites comme les tronçons de pales d'éolienne, qui ne sont pas fabriquées en général par bobinage et dont l'orientation des fibres est fixée par les contraintes d'utilisation de ces pales.

La présente invention a pour but de définir une liaison mécanique de pièces structurales et en particulier une liaison métal composite qui soit fiable, optimisée mécaniquement et en terme de masse, en particulier pour être utilisée sur des tronçons de pâles d'éoliennes.

La liaison obtenue doit en particulier être démontable, minimiser les sur-flux locaux que le composite serait susceptible de subir, être optimisée mécaniquement et être compatible avec les exigences aérodynamiques d'une pale d'éolienne.

Pour ce faire, la présente invention propose un dispositif d'assemblage de tronçons de pales d'éoliennes pourvus de caissons, comprenant au moins une attache comportant une première partie et une seconde partie, la première partie étant une partie d'assemblage avec un caisson d'un premier tronçon et la seconde partie une partie de montage avec une attache complémentaire portée par un caisson d'un second tronçon, caractérisé en ce que la première partie comprend au moins une liaison composite/métal à cisaillement pourvue d'un élément de ferrure continu sur au moins une face du caisson sur lequel est reçue une extrémité de ladite face du caisson, pourvue de pions de fixation traversant la ferrure et l'extrémité de la face.

Selon l'invention la liaison composite/métal est à au moins double cisaillement et pourvue en outre d'un élément de contre-ferrure, l'extrémité de ladite face du caisson étant reçue entre la ferrure et la contre-ferrure, les pions de fixation traversant la ferrure, l'extrémité de la face et la contre ferrure, la liaison étant en outre pourvue de moyens d'attache de la contre-ferrure sur la ferrure.

Selon un mode de réalisation particulier, la liaison composite/métal est une liaison à multi-cisaillement au droit des fixations et intègre dans le composite au moins un doubleur métallique adapté à faire transiter les efforts entre la partie composite et la ferrure métallique.

La présente invention propose une pale d'éolienne comprenant au moins deux tronçons, chacun pourvu d'un caisson caractérisée en ce que les tronçons sont assemblés au moyen d'un dispositif d'assemblage selon l'invention.

Avantageusement, l'extrémité de ladite face est terminée par une structure monolithique renfort.

Préférablement, la structure monolithique renfort est principalement renforcée par des couches carbone.

Avantageusement, ledit caisson central comporte une structure composite remplacée progressivement par la structure monolithique au niveau de la terminaison du tronçon.

Selon un mode de réalisation avantageux, ladite liaison composite/métal comporte un renfort local de l'extrémité de la face du caisson sous forme de plis composites.

Selon un mode de réalisation particulier de l'invention, l'élément de ferrure est constitué d'un cadre continu et fermé reprenant les faces et les arêtes de l'extrémité du caisson.

Selon une variante, la pale comporte deux desdites attaches dont les parties d'assemblage sont constituées d'une plaque reprenant une face de l'extrémité du caisson.

Selon cette variante, lesdites attaches sont avantageusement disposées sur les faces supérieure et inférieure des caissons situées sous l'extrado et l'intrado du tronçon de la pale.

Dans ce cas, les extrémités des faces des caissons situées entre les faces supérieure et inférieure reçoivent préférablement des équerres de liaison.

La pale de l'invention est avantageusement, telle que des extrémités des faces des caissons comportent une terminaison avec retour à la peau.

Des extrémités des faces des caissons peuvent en outre comporter une terminaison avec renfort du retour à la peau.

Selon un mode de réalisation alternatif, les extrémités des faces des caissons comportent une terminaison avec comblement d'un nid d'abeille et/ou nid d'abeille densifié.

Selon un mode de réalisation préférentiel de la pale, les parties de montage des attaches avec les attaches complémentaires comportent des faces adaptées à une fixation par liaison axiale au moyens de boulons travaillant en traction.

De manière avantageuse, les attaches sont disposées à l'intérieur du profil aérodynamique de la pale.

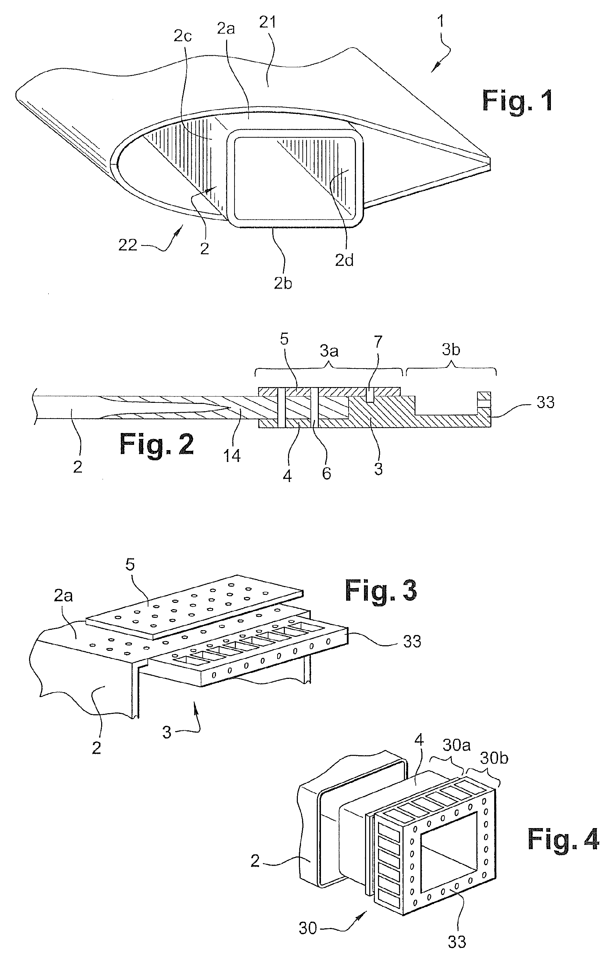

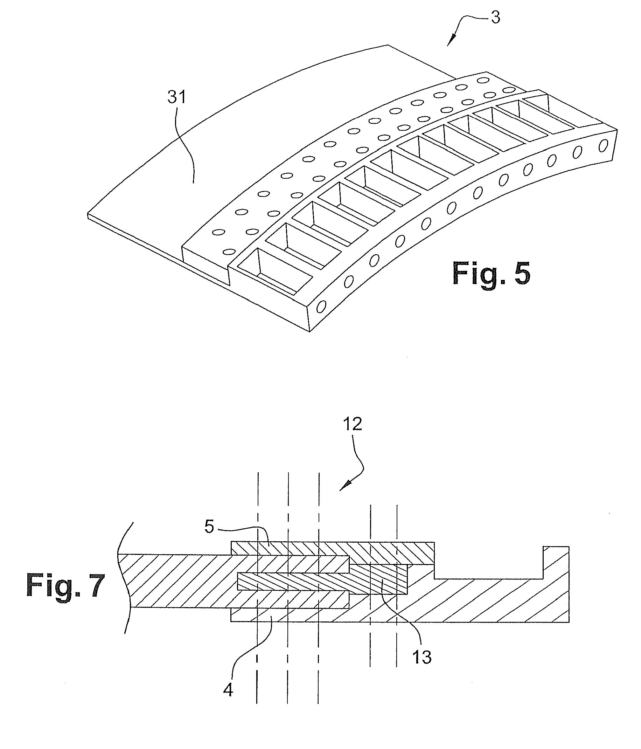

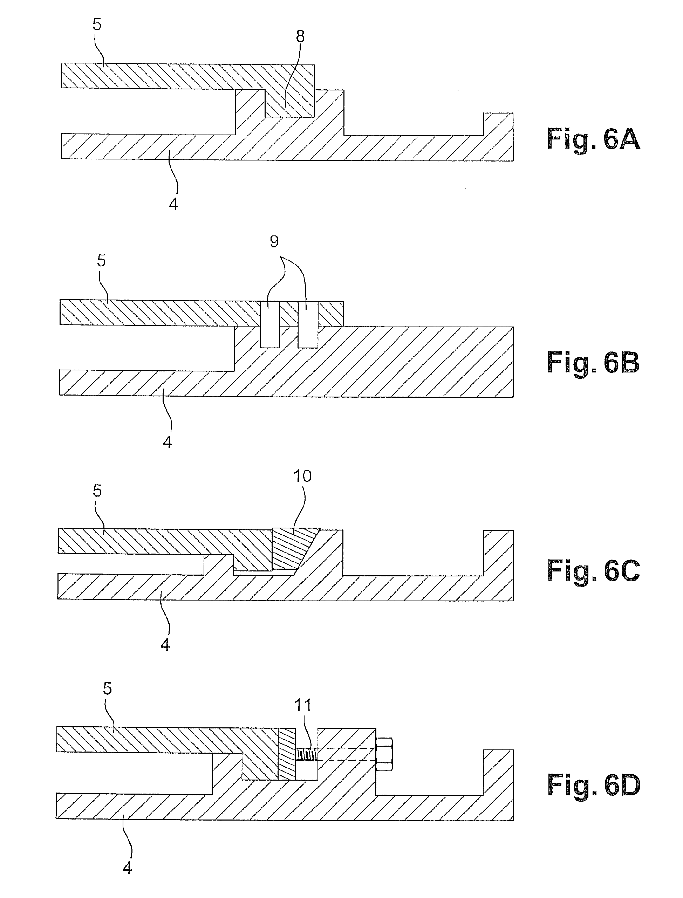

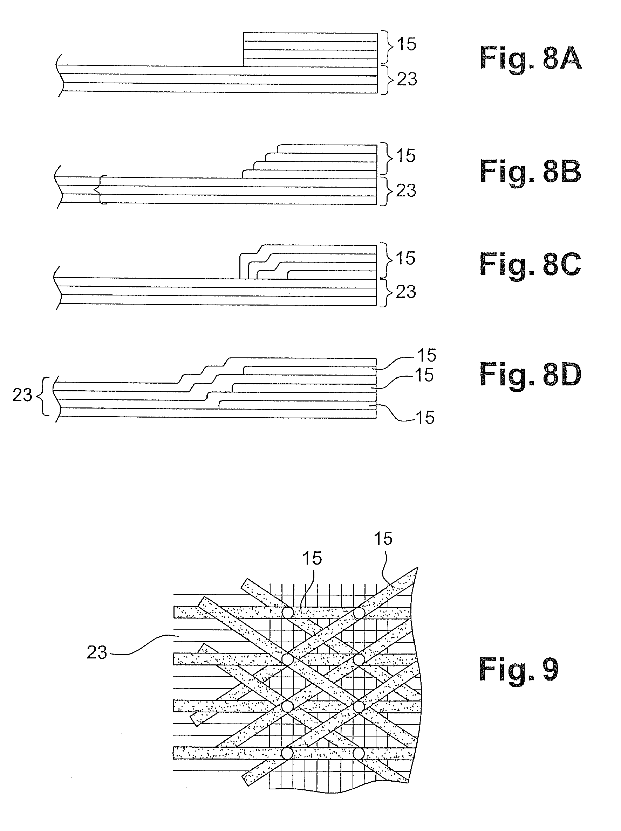

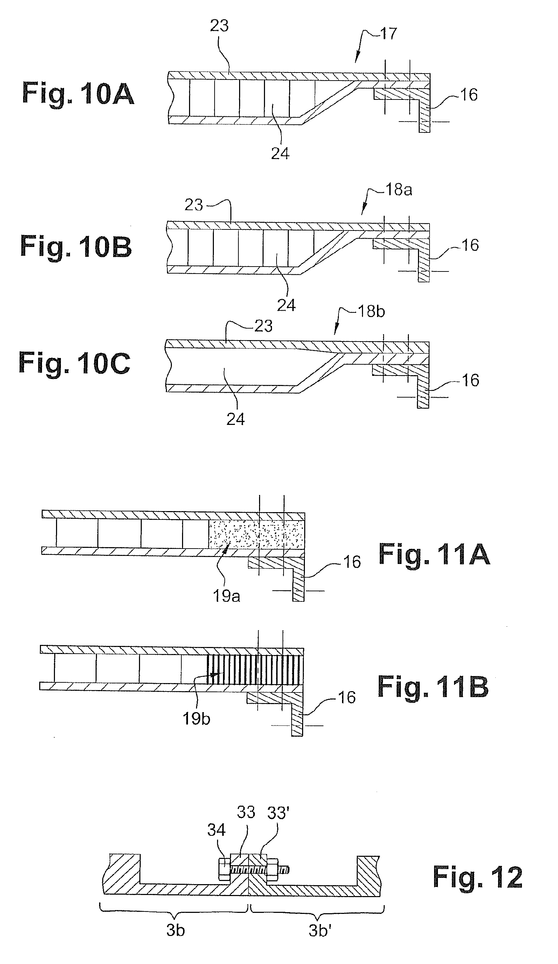

D'autres caractéristiques et avantages de l'invention seront apparents à la lecture de la description qui suit d'un exemple de réalisation non limitatif en référence aux dessins qui représentent:
en figure 1: une vue schématique en perspective d'un segment de tronçon de pale d'éolienne;
en figure 2: une vue schématique en coupe d'un premier mode de réalisation d'un dispositif selon l'invention fixé sur un élément de tronçon de pale d'éolienne;
en figure 3: une vue schématique en perspective du dispositif de la figure 2;
en figure 4: une vue en perspective d'un deuxième mode de réalisation du dispositif de l'invention;
en figure 5: une vue en perspective d'une variante de réalisation du dispositif de la figure 2;
aux figures 6A à 6D: des vues de côté en coupe de variantes de réalisation du dispositif de la figure 2;
en figure 7: une variante de réalisation de la fixation de la figure 2;
aux figures 8A à 8D: des vues en coupe de côté de détails d'exemples de réalisation de renforts d'extrémité d'éléments de tronçons de pales;
en figure 9: une vue de dessus de renforts sous forme de plis composites;
aux figures 10A à 10C: des vues en coupe de fixations complémentaires du dispositif de l'invention;
aux figures 11A et 11B: des vues en coupe de fixations alternatives aux fixations des figures 10A à 10C;
en figure 12: une vue d'un détail du dispositif de fixation de deux tronçons de pales d'éoliennes selon l'invention.

Le dispositif d'assemblage de la présente invention s'adresse par exemple à des pales d'éoliennes dont un exemple de tronçon 1 est schématisé en figure 1.

Ce tronçon comporte une peau formant l'extrado 21 et l'intrado 22 de la pale et comporte un caisson central 2 assurant la tenue mécanique de la pale.

Plusieurs types de constructions existent et on connaît les construction avec caisson intégral comprenant une poutre intégrant des renforts longerons et sur lequel est drapé le profil de la pale et les constructions avec un caisson formé par des renforts longerons intégrés dans la peau réalisant le profil de la pale et des traverses ou âmes rapportées.

Le dispositif de l'invention peut s'appliquer aux deux types de constructions.

Il comprend au moins une attache dont un premier exemple de réalisation sous la forme d'une attache plane 3 est représenté en figure 3 et dont un second exemple de réalisation est représenté en figure 4 sous la forme d'une attache en forme de cadre 30.

L'attache 3 est détaillée à la figure 2 en coupe et cette attache comporte une première partie 3a d'assemblage avec le caisson 2 et une seconde partie 3b de montage avec une attache complémentaire portée par un caisson d'un second tronçon.

La première partie 3a comprend au moins une liaison composite/métal.

Selon la figure 2, cette liaison est une liaison à double cisaillement qui est pourvue d'un élément de ferrure 4 continu sur au moins une face 2a du caisson 2, est pourvue d'un élément de contre-ferrure 5, entre lesquels est reçue une extrémité de ladite face du caisson, est pourvue de pions de fixation 6 traversant la ferrure, l'extrémité de la face et la contre ferrure et est pourvue de moyens 7 d'attache de la contre-ferrure sur la ferrure.

Le terme pion de fixation regroupe divers types de fixations tels que vis, pions, rivets ou autres moyens traversants.

Selon l'invention, les liaisons métal composite sont constituées d'une ferrure et d'une contre ferrure ou doubleur pour assurer un assemblage par double cisaillement mécanique au droit des fixations de liaison, solution plus performante qu'une liaison par simple cisaillement avec une ferrure d'un seul coté.

L'optimisation de la liaison métal composite est mis en oeuvre à partir d'éléments de calcul dont le principe est décrit plus loin.

Cette optimisation permet de définir la répartition et la forme de l'éclissage métallique, de la ferrure et du doubleur, la géométrie, le diamètre, et la nature, le matériau, des fixations sur chaque rangée, le pas optimal par rangée et entre rangées de liaison.

Dans l'exemple de la figure 7, la liaison composite/métal est une liaison à multi-cisaillement 12 au droit des fixations et intègre dans le composite au moins un doubleur métallique 13, en plus de la contre ferrure 5, adapté à faire transiter les efforts entre la partie composite et la ferrure métallique.

Une solution d'assemblage avec multi-cisaillement au droit des fixations en intégrant dans le composite des doubleurs métalliques permet d'adapter le nombre de doubleurs en fonction de la répartition du cisaillement visée sur les fixations.

En effet, plus on a de doubleur plus l'effort repris par fixation est important pour faire transiter les efforts entre la partie composite et la ferrure métallique.

Ceci permet de limiter le diamètre des boulons et d'apporter une meilleure contribution de la structure composite.

Pour la fixation de la contre ferrure sur la ferrure, plusieurs solutions de moyens d'attache tels que ceux représentés aux figures 6A à 6D sont envisageables.
La figure 6A correspond à un système pour lequel un encastrement 8 est réalisé entre la contre-ferrure et la ferrure pour maintenir la contre-ferrure.
La figure 6B correspond à un système pour lequel des pions ou des vis 9 fixent la contre-ferrure sur la ferrure.
La figure 6C correspond à un système pour lequel un coin 10 vient bloquer la contre-ferrure sur la ferrure.
La figure 6D correspond à un système pour lequel un dispositif à vis 10 vient bloquer la contre-ferrure sur la ferrure.

L'invention s'applique à une pale d'éolienne ou autre espar comportant au moins deux tronçons (1), chacun pourvu d'un caisson (2), caractérisée en ce que les tronçons sont assemblés au moyen d'une paire de dispositifs d'assemblage selon la revendication 1 ou 2.

Les pales d'éolienne sont aujourd'hui architecturées avec une poutre centrale structurale en forme de caisson appelée spar selon la terminologie anglo-saxonne qui reprend tous les efforts et une peau aérodynamique.

Dans ce cas, la liaison doit être assurée au niveau de cette poutre en caisson.

Dans le cadre de l'invention, on a en outre travaillé sur l'extrémité du caisson recevant la liaison composite/métal.

Selon une première méthode représentée à la figure 2, l'extrémité de la face 2a du caisson recevant la ferrure est terminée par une structure monolithique renfort 14 et la structure composite remplacée progressivement par la structure monolithique renfort au niveau de la terminaison du tronçon.

Cette structure monolithique renfort 14 est principalement renforcée par des couches carbone.

Selon les figures 8A à 8D et les figures 9, la liaison composite/métal comporte un renfort local de l'extrémité de la face du caisson sous forme de plis composites 15 déposés sur les plis de la peau 23.

Selon ces exemples, un renfort local de la pièce composite est réalisé dans la zone de liaison par des plis composites que l'on polymérise.

Comme représenté en figure 9, les couches de renfort de la paroi sont orientées et disposées de telle sorte que la liaison mécanique soit optimale en fonction de la reprise d'effort par rangées de fixation, de la tenue maximale en matage et en traction nette du matériau composite et métallique.

Cette orientation des plis renfort prend en compte la disposition des fixations par rangées.

Les plis renforts peuvent être disposés de multiples façons:
Selon la figure 8A, les plis sont déposés les uns au dessus des autres, le renfort est entièrement à l'extérieur. Le transfert d'effort partie courante/ renfort n'est pas optimal, un changement brutal de raideur existe et une surcontrainte en bord peut conduire à un délaminage.

Selon la figure 8B, les plis sont étagés selon une pente. Le renfort est toujours entièrement à l'extérieur et le transfert d'effort partie courante/ renfort n'est pas optimal.

Un délaminage du premier renfort reste un problème majeur et il n'y a pas de transmission dans le renfort.

Selon la figure 8C, les plis s'empilent et chaque pli revient à la surface du caisson.

Le transfert des efforts est correct, le renfort est entièrement à l'extérieur, le transfert d'effort partie courante/ renfort n'est pas optimal.

Selon cet exemple, le transfert couche par couche est amélioré et le passage des efforts est optimisé sur chaque couche.

Cette solution permet de transférer les effort même dans le cas d'un délaminage sur une couche.

La figure 8D pour laquelle les plis renforts et les plis du longeron sont imbriqués correspond à une solution optimale dans laquelle le transfert se fait par multicisaillement.

Cette solution est optimisée en transfert et est apte à assurer le transfert des efforts malgré un délaminage sur une ou plusieurs couches.

De retour à l'exemple de la figure 3, les ferrures sont des ferrures continues et adaptées à chaque coté de la paroi travaillante du caisson du tronçon de pale et en particulier sur les deux parois les plus sollicités mécaniquement: c'est à dire les parois 2a, 2b coté peau 21, 22.

Dans ce cas, les faces internes 2c, 2d ne participant que faiblement à la reprise des efforts peuvent n'être reliées que par des dispositifs d'équerres tels que représentés aux figures 10A à 11 B.

Dans l'exemple de la figure 4, le dispositif est réalisé sous forme d'un cadre interne continu s'ajustant sur les 4 faces de la poutre de la pale, l'élément de ferrure étant alors constitué d'un cadre continu et fermé 30 reprenant les faces et les arêtes de l'extrémité du caisson 2.

Dans le cas de la figure 5 variante de la figure 3, les parties d'assemblage sont constituées d'une plaque 31 reprenant une face de l'extrémité du caisson.

Ce profil est adapté à un caisson convexe, le dispositif comportant deux desdites attaches 3.

Les attaches sont dans ce cas disposées sur les faces supérieure 2a et inférieure 2b des caissons situées sous l'extrado 21 et l'intrado 22 du tronçon de la pale.

Dans un tel cas où les extrémités des faces 2c, 2d du caisson situées entre les faces supérieure et inférieure reçoivent des équerres de liaison 16, les extrémités des faces des caissons comportent une terminaison avec retour à la peau 17, 18a, 18b comme représenté aux figures 10A à 10C.

Dans une telle configuration, les peaux 23 recouvrant l'âme 24 se rejoignent à l'extrémité du caisson.

Selon la figure 10A, le retour à la peau 17 se fait vers le côté interne de la paroi opposé au côté recevant l'équerre 16.

En outre, les extrémités des faces des caissons peuvent comporter une terminaison avec renfort du retour à la peau.

Selon la figure 10B, le retour à la peau 18a se fait vers le côté interne de la paroi opposé au côté recevant l'équerre 16 et un renforcement de la peau côté interne est réalisé.

Selon la figure 10C, le retour à la peau 18b se fait vers le côté interne de la paroi opposé au côté recevant l'équerre 16 et des renforcements de la peau côté interne et externe sont réalisés.

De manière alternative, les extrémités de caissons recevant les équerres comportent une terminaison avec comblement d'un nid d'abeille 19a comme représenté en figure 11A. Dans le cas de la figure 11B, les extrémités des caissons sont constituées d'un nid d'abeille densifié 19b.

Du côté de la liaison entre les attaches, les parties 3b de montage des attaches avec les attaches complémentaires comportent comme représenté à la figure 12 des faces 33 adaptées à une fixation par liaison axiale au moyens de boulons 34 travaillant en traction.

De nombreux dispositifs sont connus pour ce faire mais on préfère dans le cadre de l'invention, une fixation axiale qui permet une liaison continue, qui limite les irrégularités de flux et qui permet une liaison dans la continuité du profil et facilite l'obtention du profil aérodynamique à la liaison

L'assemblage des ferrures métalliques à l'aide de moyens de fixation tels que des boulons sert au transfert d'effort par cisaillement dans les fixations et par matage dans les pièces métalliques et composite.

Ces attaches 3, 30 sont disposées à l'intérieur du profil aérodynamique de la pale.

La solution de l'invention s'applique à une pale segmentée en deux parties dont la longueur de pale est de l'ordre de 60 m, la masse de l'ordre de 18 Tonnes, la construction est une construction en fibres composites et une structure à caisson central.

La pale est constituée classiquement de deux peaux aérodynamiques, réalisées séparément par infusion sous vide en fibre de verre et/ou de carbone associée à une résine époxy.

Selon une première version, un longeron fabriqué séparément, soit en monobloc, soit par collage de deux oméga est rapporté dans le moule de forme de la pale.

Ce longeron a pour fonction d'apporter sa rigidité longitudinale à la pale.

Il est également fabriqué par infusion en fibre de verre et résine époxy, mais peut contenir une proportion de fibre de carbone, dans un souci d'allègement.

Les deux peaux et le longeron sont ensuite assemblés par collage structural au niveau du bord d'attaque, du bord de fuite et du longeron.

Selon une seconde version, la partie centrale de la paroi de la pale sera dans cette solution une structure sandwich (âme en nid d'abeille ou mousse dans le but d'avoir le maximum d'inertie locale) renforcée dans cette zone principalement par des renforts carbone.

Comme précédemment cette partie de la structure de la pale joue le rôle de longeron et a pour fonction d'apporter de la rigidité longitudinale et de reprendre l'ensemble des efforts axiaux le long de la structure.

Les parois internes sont alors intégrées par collage lors de l'accostage des deux peaux

Dans ce cas notamment, le renforcement local monolithique 14 au niveau de la liaison composite métal comme représenté en figure 2 est nécessaire.

La paroi sandwich du longeron de la demi-pale est progressivement remplacée dans sa zone d'extrémité de liaison par la structure monolithique principalement renforcée par des couches carbone afin d'assurer la reprise des efforts en matage et traction/compression des fixations (boulons ou pions) de la ferrure et du doubleur métallique.

La ferrure et le doubleur sont des pièces monobloc épousant le profil de la paroi des cotés travaillant du longeron.

La ferrure qui permet la liaison inter-segment des 2 demi-pales est un concept dite de cadre à chapelle qui permet une liaison axiale ou les boulons travaillent en traction. Pour mémoire une liaison par boulons radiaux peut être envisagée avec la mise en place au préalable d'écrous imperdables sur la partie interne de la ferrure.

La méthode de dimensionnement d'une telle liaison composite/métal est appliquée dans le cadre d'une définition de détail comme suit:
- le transfert d'effort entre le composite et les éléments métalliques est réalisé par des fixations par boulons disposés sur 2 à 4 rangées, tous les boulons ayant le même diamètre ; en effet pour des raisons industrielles il est plus simple de n'avoir qu'un nombre minimum de famille de boulons à gérer ;
- l'épaisseur du composite est maintenue constante, pour des raisons de simplicité de fabrication ;
- par contre, les ailes de la ferrure et du doubleur sont d'épaisseur progressive pour repartir de façon équivalente les efforts sur chaque rangée conformément à la méthode de calcul multicisaillement ;
- le doubleur métallique est lié à la ferrure par des fixations qui transfèrent les efforts par simple cisaillement.

Pour l'optimisation mécanique de la liaison multi-cisaillement, au lieu de ramener à priori le système à un système équivalent auquel on peut appliquer la méthode de Huth globalement, on décompose le système en sous ensembles auxquels on applique rigoureusement la méthode de Huth.

En pratique, la méthode consiste à décrire chaque cisaillement par sa raideur, puis à appliquer les relations mécaniques classiques et simple. On aboutit au final à un système d'équations adapté à une résolution sur un ordinateur.

De ce fait, on est à même de prendre en compte toutes les spécificités de chaque cisaillement (matériau, module, épaisseur) et donc de calculer précisément en chaque point l'état de contrainte.

Ceci permet de dimensionner chaque zone au mieux par un processus itératif (quand on trouve à une itération une contrainte trop élevée, on rajoute de la matière, ou à l'inverse si la contrainte est faible, on peut en enlever).

Pour ce faire, on va décomposer le système réel en autant de système de Huth qu'il y a d'interface de cisaillement simple.

A titre d'exemple, pour le cas d'une liaison à cisaillement d'ordre 4 (2 ailes de composite et 3 ailes de métal), et constituée de 3 rangées de pions, on obtient un ensemble de 8 sous systèmes de Huth « maille ». Ces sous ensembles sont représentés par des ensembles de 4 ressorts, chaque ressort étant représentatif de la raideur du matériau sollicité.

Selon la méthode, deux mailles adjacentes sont reliées par un « ressort », ce qui traduit le fait qu'un même matériau est sollicité par deux zones de cisaillement distinctes : c'est en fait ce que le modèle de Huth antérieur ne savait pas faire.

Pour dimensionner les liaisons, il reste alors à calculer les diverses raideurs, en fonction des propriétés des matériaux concernés, de la géométrie des pièces mises en jeu et bien entendu des efforts à faire passer dans la liaison.

Un cas particulier d'application concerne une pale d'éolienne pour laquelle on utilise une liaison à double cisaillement telle que décrit ci-dessus en référence à la figure 3, dans le cas d'un caisson à flancs droits, ou la figure 5, dans le cas de caissons incurvés.

Pour une telle pale, la fixation des doubleurs se fait selon l'exemple décrit ci-dessus en référence à la figure 6B, la liaison utilise des chapelles continues et des renforts des parties composites selon l'exemple décrit en référence aux figures 8C ou 8D, respectivement couches renfort 15 déposées avec un recouvrement et un retour à la peau 23 de chacune des couches ou couches renfort 15 imbriquées entre les couches 23 des longerons.

Enfin toujours dans ce cas particulier, de simples équerres, comme notamment dans l'exemple en rapport avec la figure 10C, sont utilisées pour relier les traverses reliant le longeron d'intrado et le longeron d'extrado.

L'invention n'est pas limitée aux exemples représentés et on peut à priori prendre en compte de façon indépendante chaque pion, chaque matériau, ce qui donne une grande liberté de choix de solutions pouvant être optimisées.

## Revendications

1. Pale d'éolienne comprenant au moins deux tronçons (1), chacun pourvu d'un caisson (2), pour laquelle les tronçons sont assemblés au moyen d'une paire de dispositifs d'assemblage comprenant au moins une attache (3, 30) comportant une première partie (3a, 30a) et une seconde partie (3b, 30b), la première partie étant une partie d'assemblage avec un caisson (2) d'un premier tronçon et la seconde partie une partie de montage avec une attache complémentaire portée par le caisson d'un second tronçon, **caractérisé en ce que** la première partie (3a) comprend au moins une liaison composite/métal à cisaillement pourvue d'un élément de ferrure (4) continu sur au moins une face (2a) du caisson (2) sur lequel est reçue une extrémité de ladite face du caisson, la première partie étant pourvue de pions de fixation (6) traversant la ferrure et l'extrémité de la face, la liaison composite/métal étant à au moins double cisaillement et pourvue en outre d'un élément de contre-ferrure (5), l'extrémité de ladite face du caisson étant reçue entre la ferrure et la contre-ferrure, les pions de fixation (6) traversant la ferrure, l'extrémité de la face et la contre ferrure, la liaison étant en outre pourvue de moyens (7, 8, 9, 10, 11) d'attache de la contre-ferrure sur la ferrure..

2. Pale d'éolienne selon la revendication 1 pour laquelle la liaison composite/métal est une liaison à multi-cisaillement (12) au droit des fixations et intègre dans le composite au moins un doubleur métallique (13) adapté à faire transiter les efforts entre la partie composite et la ferrure métallique.

3. Pale d'éolienne selon la revendication 1 ou 2, **caractérisée en ce que** l'extrémité de ladite face (2a) est terminée par une structure monolithique renfort composite (14).

4. Pale d'éolienne selon la revendication 3, **caractérisée en ce que** la structure monolithique renfort composite (14) est principalement renforcée par des couches carbone.

5. Pale d'éolienne selon la revendication 3 ou 4, pour laquelle ledit caisson central (2) comporte une structure composite remplacée progressivement par la structure monolithique renfort composite au niveau de la terminaison du tronçon.

6. Pale d'éolienne selon l'une quelconque des revendications 1 à 5 pour laquelle ladite liaison composite/métal comporte un renfort local de l'extrémité de la face du caisson sous forme de plis composites (15).

7. Pale d'éolienne selon l'une quelconque des revendications 1 à 6 pour laquelle l'élément de ferrure est constitué d'un cadre continu et fermé (30) reprenant les faces et les arêtes de l'extrémité du caisson (2).

8. Pale d'éolienne selon l'une quelconque des revendications 1 à 6 **caractérisée en ce qu'**elle comporte deux desdites attaches (3) dont les parties d'assemblage sont constituées d'une plaque (31) reprenant une face de l'extrémité du caisson.

9. Pale d'éolienne selon la revendication 8 pour laquelle lesdites attaches sont disposées sur les faces supérieure (2a) et inférieure (2b) des caissons situées sous l'extrado (21) et l'intrado (22) du tronçon de la pale.

10. Pale d'éolienne selon la revendication 9 pour laquelle les extrémités des faces (2c, 2d) du caisson situées entre les faces supérieure et inférieure reçoivent des équerres de liaison (16).

11. Pale d'éolienne selon l'une quelconque des revendications 1 à 10 pour laquelle des extrémités des faces des caissons comportent une terminaison avec retour à la peau (17, 18a, 18b).

12. Pale d'éolienne selon la revendication 11 pour laquelle des extrémités des faces des caissons comportent une terminaison avec renfort du retour à la peau (18a, 18b).

13. Pale d'éolienne selon l'une quelconque des revendications 1 à 10 pour laquelle les extrémités des faces des caissons comportent une terminaison avec comblement d'un nid d'abeille (19a) et/ou nid d'abeille densifié (19b).

14. Pale d'éolienne selon l'une quelconque des revendications 1 à 13 pour laquelle les parties (3b) de montage des attaches avec les attaches complémentaires comportent des faces (33) adaptées à une fixation par liaison axiale au moyens de boulons (34) travaillant en traction.

15. Pale d'éolienne selon l'une quelconque des revendications 1 à 14 pour laquelle les attaches (3, 30) sont disposées à l'intérieur du profil aérodynamique de la pale.

## Patentansprüche

1. Windkraftanlage-Rotorblatt, das mindestens zwei Abschnitte (1) enthält, die je mit einem Kasten (2) versehen sind, wobei die Abschnitte mittels eines Paars von Zusammenbauvorrichtungen zusammengebaut werden, die mindestens eine Halterung (3, 30) enthalten, die einen ersten Teil (3a, 30a) und einen zweiten Teil (3b, 30b) aufweist, wobei der erste Teil ein Teil zum Zusammenbau mit einem Kasten (2) eines ersten Abschnitts und der zweite Teil ein Montageteil mit einer komplementären Halterung ist, die vom Kasten eines zweiten Abschnitts getragen wird, **dadurch gekennzeichnet, dass** der erste Teil (3a) mindestens eine Verbundwerkstoff-Metall-Scherverbindung enthält, die mit einem durchgehenden Beschlagelement (4) auf mindestens einer Seite (2a) des Kastens (2) versehen ist, auf dem ein Ende der Seite des Kastens aufgenommen wird, wobei der erste Teil mit Befestigungsstiften (6) versehen ist, die den Beschlag und das Ende der Seite durchqueren, wobei die Verbundwerkstoff-Metall-Verbindung mindestens eine doppelte Scherverbindung und außerdem mit einem Gegenbeschlagelement (5) versehen ist, wobei das Ende der Seite des Kastens zwischen dem Beschlag und dem Gegenbeschlag aufgenommen wird, wobei die Befestigungsstifte (6) den Beschlag, das Ende der Seite und den Gegenbeschlag durchqueren, wobei die Verbindung außerdem mit Einrichtungen (7, 8, 9, 10, 11) zur Halterung des Gegenbeschlags auf dem Beschlag versehen ist.

2. Windkraftanlage-Rotorblatt nach Anspruch 1, wobei die Verbundwerkstoff-Metall-Verbindung eine Mehrfach-Scherverbindung (12) vor den Befestigungen ist und im Verbundwerkstoff mindestens einen metallischen Verdoppler (13) umfasst, der geeignet ist, die Kräfte zwischen dem Verbundwerkstoffteil und dem metallischen Beschlag übergehen zu lassen.

3. Windkraftanlage-Rotorblatt nach Anspruch 1 oder 2, **dadurch gekennzeichnet, dass** das Ende der Seite (2a) in einer monolithischen Verbundverstärkungsstruktur (14) endet.

4. Windkraftanlage-Rotorblatt nach Anspruch 3, **dadurch gekennzeichnet, dass** die monolithische Verbundverstärkungsstruktur (14) hauptsächlich durch Kohlenstoffschichten verstärkt wird.

5. Windkraftanlage-Rotorblatt nach Anspruch 3 oder 4, wobei der zentrale Kasten (2) eine Verbundstruktur aufweist, die im Bereich des Endstücks des Abschnitts progressiv von der monolithischen Verbundverstärkungsstruktur ersetzt wird.

6. Windkraftanlage-Rotorblatt nach einem der Ansprüche 1 bis 5, wobei die Verbundwerkstoff-Metall-Verbindung eine lokale Verstärkung des Endes der Seite des Kastens in Form von Verbundlagen (15) aufweist.

7. Windkraftanlage-Rotorblatt nach einem der Ansprüche 1 bis 6, wobei das Beschlagelement aus einem durchgehenden und geschlossenen Rahmen (30) besteht, der die Seiten und die Kanten des Endes des Kastens (2) trägt.

8. Windkraftanlage-Rotorblatt nach einem der Ansprüche 1 bis 6, **dadurch gekennzeichnet, dass** es zwei der Halterungen (3) aufweist, deren Zusammenbauteile aus einer Platte (31) bestehen, die eine Seite des Endes des Kastens trägt.

9. Windkraftanlage-Rotorblatt nach Anspruch 8, wobei die Halterungen an der Oberseite (2a) und Unterseite (2b) der Kästen angeordnet sind, die sich unter der Oberseite (21) und der Unterseite (22) des Abschnitts des Rotorblatts befinden.

10. Windkraftanlage-Rotorblatt nach Anspruch 9, wobei die Enden der Seiten (2c, 2d) des Kastens, die sich zwischen der Oberseite und der Unterseite befinden, Verbindungswinkeleisen (16) aufnehmen.

11. Windkraftanlage-Rotorblatt nach einem der Ansprüche 1 bis 10, wobei Enden der Seiten der Kästen ein Endstück mit Rückkehr zur Haut (17, 18a, 18b) aufweisen.

12. Windkraftanlage-Rotorblatt nach Anspruch 11, wobei Enden der Seiten der Kästen ein Endstück mit Verstärkung der Rückkehr zur Haut (18a, 18b) aufweisen.

13. Windkraftanlage-Rotorblatt nach einem der Ansprüche 1 bis 10, wobei die Enden der Seiten der Kästen ein Endstück mit Füllung einer Wabenstruktur (19a) und/oder einer verdichteten Wabenstruktur (19b) aufweisen.

14. Windkraftanlage-Rotorblatt nach einem der Ansprüche 1 bis 13, wobei die Montageteile (3b) der Halterungen mit den komplementären Halterungen Seiten (33) aufweisen, die für eine Befestigung durch axiale Verbindung mittels Bolzen (34) geeignet sind, die auf Zug arbeiten.

15. Windkraftanlage-Rotorblatt nach einem der Ansprüche 1 bis 14, wobei die Halterungen (3, 30) im Inneren des aerodynamischen Profils des Rotorblatts angeordnet sind.

## Claims

1. Wind turbine blade comprising at least two sections (1), each provided with a casing (2), in which the sections are assembled by means of a pair of assembly devices comprising at least one tie (3, 30) comprising a first part (3a, 30a) and a second part (3b, 30b), the first part being a part for assembly with a casing (2) of a first section and the second part being a part for mounting with a complementary tie borne by the casing of a second section, **characterized in that** the first part (3a) comprises at least one shear composite/metal connection provided with a fitting element (4) which is continuous over at least one face (2a) of the casing (2) and on which one end of the said face of the casing is received, the first part being provided with fixing pins (6) traversing the fitting and the end of the face, the composite/metal connection being an at least double shear connection and additionally being provided with a counter-fitting element (5), the end of the said face of the casing being received between the fitting and the counter-fitting, the fixing pins (6) traversing the fitting, the end of the face and the counter-fitting, the connection additionally being provided with means (7, 8, 9, 10, 11) for attaching the counter-fitting to the fitting.

2. Wind turbine blade according to Claim 1, in which the composite/metal connection is a multi-shear connection (12) perpendicular to the fixings and integrates into the composite at least one metal doubler (13) adapted to transfer the forces between the composite part and the metal fitting.

3. Wind turbine blade according to Claim 1 or 2, **characterized in that** the end of the said face (2a) is terminated by a composite reinforcing monolithic structure (14).

4. Wind turbine blade according to Claim 3, **characterized in that** the composite reinforcing monolithic structure (14) is mainly reinforced by carbon layers.

5. Wind turbine blade according to Claim 3 or 4, in which the said central casing (2) comprises a composite structure replaced progressively by the composite reinforcing monolithic structure at the termination of the section.

6. Wind turbine blade according to any one of Claims 1 to 5, in which the said composite/metal connection comprises a local reinforcement of the end of the face of the casing in the form of composite plies (15).

7. Wind turbine blade according to any one of Claims 1 to 6, in which the fitting element is formed by a closed continuous frame (30) receiving the faces and the edges of the end of the casing (2).

8. Wind turbine blade according to any one of Claims 1 to 6, **characterized in that** it comprises two of the said ties (3) of which the assembly parts are formed by a plate (31) receiving a face of the end of the casing.

9. Wind turbine blade according to Claim 8, in which the said ties are arranged on the upper face (2a) and lower face (2b) of the casings situated under the suction side (21) and the pressure side (22) of the section of the blade.

10. Wind turbine blade according to Claim 9, in which the ends of the faces (2c, 2d) of the casing that are situated between the upper and lower faces receive connection brackets (16).

11. Wind turbine blade according to any one of Claims 1 to 10, in which ends of the faces of the casings comprise a termination with a return to the skin (17, 18a, 18b).

12. Wind turbine blade according to Claim 11, in which ends of the faces of the casings comprise a termination with a reinforcement of the return to the skin (18a, 18b).

13. Wind turbine blade according to any one of Claims 1 to 10, in which the ends of the faces of the casings comprise a termination with a filling of a honeycomb (19a) and/or a densified honeycomb (19b).

14. Wind turbine blade according to any one of Claims 1 to 13, in which the parts (3b) for mounting ties with the complementary ties comprise faces (33) adapted for fixing by axial connection by means of bolts (34) working in traction.

15. Wind turbine blade according to any one of Claims 1 to 14, in which the ties (3, 30) are arranged inside the aerodynamic profile of the blade.
